# EUROPÄISCHE PATENTANMELDUNG

(11) **EP 3 623 137 A1**
(43) Veröffentlichungstag der Anmeldung: **18.03.2020**
(21) Anmeldenummer: 18194177.4
(22) Anmeldetag: 14.09.2018
(51) Int. Cl.: B29C 64/118, B33Y 80/00, B33Y 70/00, B33Y 10/00, B29C 64/00, B29C 70/16

(54) **MITTELS ENDLOSFASERN VERSTÄRKTE 3D-GEDRUCKTE ELASTISCHE ERZEUGNISSE MIT ASYMMETRISCHEN ELASTISCHEN EIGENSCHAFTEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Ein faserverstärktes, 3D gedrucktes elastisches Erzeugnis, wobei das Erzeugnis (1, 4, 8, 11, 12) einen Gewichtsanteil von ≥ 50% eines Polymers mit einem mittleren Molekulargewicht von ≥ 5.000 g/mol, gemessen mittels GPC, und einen Gewichtsanteil von ≥ 0,5 % und ≤ 20% einer oder mehrerer Fasern mit einem Aspektverhältnis von ≥ 100 und einer Länge von ≥ 3 cm und ≤ 1000 cm aufweist, wobei das Erzeugnis zumindest anteilig mittels eines FFF-(Fused Filament Fabrication) Verfahrens hergestellt ist und das Erzeugnis im Bereich der Faserverstärkung und in Richtung der Fasersymmetrieachse einen Zugmodul von ≥ 1,5 GPa aufweist.

## Beschreibung

Die vorliegende Erfindung betrifft ein faserverstärktes, 3D gedrucktes elastisches Erzeugnis, wobei das Erzeugnis einen Gewichtsanteil von ≥ 50% eines Polymers mit einem mittleren Molekulargewicht von ≥ 5.000 g/mol, gemessen mittels GPC, und einen Gewichtsanteil von ≥ 0,5 % und ≤ 20% einer oder mehrerer Fasern mit einem Aspektverhältnis von ≥ 100 und einer Länge von ≥ 3 cm und ≤ 1000 cm aufweist, wobei das Erzeugnis zumindest anteilig mittels eines FFF-(Fused Filament Fabrication) Verfahrens hergestellt ist und das Erzeugnis im Bereich der Faserverstärkung und in Richtung der Fasersymmetrieachse einen Zugmodul von ≥ 1,5 GPa aufweist. Die Erfindung betrifft weiterhin ein 3D-Druckverfahren zur Herstellung eines solchen Erzeugnisses.

Die Eigenschaften von Erzeugnissen ergeben sich in komplexer Weise aus dem Herstellverfahren und den eingesetzten Materialen. So lassen sich in der Regel sowohl als Funktion der Parameter im Herstellungsweg als auch über die Zusammensetzung der eingesetzten Grundmaterialien die Eigenschaften des fertigen Werkstücks gezielt verändern, sodass (günstigenfalls) über die komplexe Matrix aus beiden Einflussgrößen Endprodukte mit gänzlich anderen Eigenschaften erhältlich sind. Dieser fundamentale Zusammenhang ergibt sich in der Regel für sämtliche Herstellungsverfahren und kann durch Sammeln von Produktionserfahrung in die einzelnen Wirkkomponenten zergliedert werden. Im Rahmen moderner Fertigungsverfahren, welche auf mehreren Stufen oder parallelen Verfahrensschritten basieren, lassen sich diese Ursache-Wirkungsbeziehungen schwerer ermitteln, da ein Rückgriff auf eine langjährige Produktionserfahrung nicht möglich ist. Dies gilt beispielsweise für die Herstellung von Erzeugnissen über den 3D-Druck, einer im Vergleich zu anderen Verfahren zur Herstellung von Formkörpern relativ neuen Herstellungsweise, wobei auch hier gilt, dass die Eigenschaften der hergestellten Formkörper sich in komplexer Weise aus dem Zusammenspiel zwischen Herstellungsverfahren und eingesetzten Material ergeben. Die Komplexität kann sich bei dem 3D-Druck zudem noch dadurch erhöhen, dass neben dem "einfachen" Druck eines Basismaterials komplexere Mischungen und/oder unterschiedliche Materialien mit unterschiedlichen Eigenschaften und schwer vorhersagbaren Wechselwirkungen untereinander eingesetzt werden. Hierdurch können sich Produkteigenschaften ergeben, welche nicht über die Eigenschaften der eingesetzten Materialien extrapoliert werden können.

3D gedruckte Erzeugnisse mit Faserverstärkung und deren Herstellung sind im Stand der Technik beschrieben.

So offenbart beispielsweise die US 9,688,028 B2 ein Verfahren zur Herstellung anisotrop gefüllter 3D gedruckter Körper. Das Verfahren beinhält, dass eine dreidimensionale Geometrie empfangen und in Schichten geschnitten wird. Ein erster anisotroper Füllwerkzeugweg zum Steuern eines dreidimensionalen Druckers zum Abscheiden eines im Wesentlichen anisotropen Füllmaterials wird erzeugt, welcher zumindest einen Teil eines Inneren einer ersten Schicht definiert. Ein zweiter anisotroper Füllwerkzeugweg zum Steuern eines dreidimensionalen Druckers wird erzeugt, um das im Wesentlichen anisotrope Füllmaterial abzuscheiden, welches zumindest einen Teil eines Inneren einer zweiten Schicht definiert. Ein erzeugter isotroper Füllmaterialwerkzeugweg definiert mindestens einen Teil eines Umfangs und mindestens einen Teil eines Inneren einer dritten Schicht, die zwischen der ersten und der zweiten Schicht liegt.

Die US 2016/0067928 A1 beschreibt ein Verfahren zur Herstellung anisotrop gefüllter 3D gedruckter Körper mittels FDM Verfahren enthaltend die Ablage mindestens eines Isotropen und mindestens eines anisotropen Materials. Das Dokument beschreibt, dass eine dreidimensionale Geometrie empfangen und in Schichten geschnitten wird. Ein erster anisotroper Füllwerkzeugweg zum Steuern eines dreidimensionalen Druckers zum Abscheiden eines im Wesentlichen anisotropen Füllmaterials wird erzeugt, der zumindest einen Teil eines Inneren einer ersten Schicht definiert. Ein zweiter anisotroper Füllwerkzeugweg zum Steuern eines dreidimensionalen Druckers, um das im Wesentlichen anisotrope Füllmaterial abzuscheiden, definiert zumindest einen Teil eines Inneren einer zweiten Schicht. Ein erzeugter isotroper Füllmaterialwerkzeugweg definiert mindestens einen Teil eines Umfangs und mindestens einen Teil eines Inneren einer dritten Schicht, die zwischen der ersten und der zweiten Schicht liegt.

Ein weiteres Patentdokument, die US 2018 007 2040 A1, beschreibt den 3D Druck von langfaserverstärkten Thermoplasten in einem FDM Verfahren zur Herstellung faserverstärkter Bauteile. Das Verfahren umfasst das Empfangen eines ersten 3D-Werkzeugweges, der eine gekrümmte Füllmaterialschale definiert, Empfangen erster 2D-Werkzeugwege, die flache Trägerschalen definieren, Aufnehmen eines zweiten 3D-Werkzeugwegs, der eine gekrümmte Hülle aus langem Faserverbundmaterial definiert, wobei das lange Faserverbundmaterial ein Filament mit einer Matrix umfasst; Einbetten von Fasern mit einer Länge von mehr als dem zweifachen Durchmesser des Filaments, Betätigen eines Füllmaterialabscheidungskopfes, um den ersten 3D-Werkzeugweg zu verfolgen, um die Füllmaterial-gekrümmte Schale nicht parallel zu einem Drucksubstrat abzuscheiden, Betätigen eines Trägermaterialabscheidungskopfes zum Nachführen der ersten 2D-Werkzeugwege, um Trägermaterial in einer Abfolge von im Wesentlichen flachen Schalen abzuscheiden und einen langen Faserablagerungskopf zu betätigen, um den zweiten 3D-Werkzeugweg nicht parallel zum Drucksubstrat zu verfolgen, um die aus langen Faserverbundmaterial bestehende gekrümmte Hülle abzuscheiden, wobei wenigstens ein Teil des Füllmaterials die gekrümmte Schale umschließt.

Weiterhin beschreibt die CN 106 313 496 A ein Verfahren zur Verarbeitung von Endlosfasern zusammen mit Thermoplasten in einem speziellen FDM Verfahren. Das Dokument offenbart ein 3D-Druckverfahren für ein endlosfaserverstärktes thermoplastisches Harzmatrix-Verbundmaterial und einen Druckkopf. Gemäß des Verfahrens können Faserbündel und geschmolzene thermoplastische Harze einem Rotationsmischen unterworfen und dann einer Rotationsextrusion unterzogen werden, wobei die extrudierten Drähte spiralförmig sind; und der Druckkopf kann die Faserbündel und die thermoplastischen Harze in einem Schmelzhohlraum laden, und spiralförmige Zahnringe sind an den Innenseiten des Schmelzhohlraums und eines Extrusionskopfes angeordnet und drehen sich in entgegengesetzten Richtungen. Die erwärmten geschmolzenen Harze und Fasern werden durch die spiralförmigen Zahnringe gerührt, die nach dem Mischen in zwei Richtungen rotieren, so dass die Fasern aus einer flachen Form kompakt in eine spiralförmige Säulenform gewickelt werden, die Harze werden gleichmäßig in jeder Faserorientierung verteilt und dann wird eine Mischung von einer Extrusionsöffnung zu einem Formgebungsgebiet extrudiert, abgekühlt und gehärtet, um eine räumliche Einheit zu bilden. Gemäß des Verfahrens und dem Druckkopf können die flachen Großkabelfasern als Verstärkungen in einem 3D-Druckverfahren verwendet werden, wobei die kompakt gewickelten Fasern einen hohen Verdichtungsgrad aufweisen, die Fasern und die Matrizen sind ausreichend getränkt, und die gebildeten Fasern und Harze sind gleichmäßig verteilt; daher sind das Verfahren und der Druckkopf in der Lage, die mechanischen Eigenschaften eines Elements und die Formungsqualität zu verbessern.

Die WO 2015 120 429 A1 beschreibt ein Verfahren zur Verarbeitung von Endlosfasern durch Extrusion einer thixotropen nachvernetzbaren Flüssigkeit enthaltend neben der Fasern noch Füllstoffe. Das Dokument beschreibt eine Filamentstruktur, die während des 3D-Drucks aus einer Düse extrudiert wird, welche ein Endlosfilament mit darin dispergierten Füllstoffpartikeln umfasst. Zumindest ein Teil der Füllstoffpartikel in dem kontinuierlichen Filament umfasst Partikel mit hohem Seitenverhältnis, die eine vorbestimmte Orientierung in Bezug auf eine Längsachse des kontinuierlichen Filaments aufweisen. Die Partikel mit hohem Seitenverhältnis können zumindest teilweise entlang der Längsachse des kontinuierlichen Filaments ausgerichtet sein. In einigen Ausführungsformen können die Partikel mit hohem Seitenverhältnis stark entlang der Längsachse ausgerichtet sein. Auch oder alternativ kann zumindest ein Teil der Teilchen mit hohem Seitenverhältnis eine helikale Ausrichtung aufweisen, die eine Umfangskomponente und eine Längskomponente umfasst, wobei die Umfangskomponente durch Drehung einer Abscheidungsdüse erzeugt wird und die Längskomponente durch Translation der Abscheidedüse übertragen wird Depositionsdüse.

Die WO 2018 081 554 A1 hingegen beschreibt ein Verfahren zur Herstellung endlosfaserverstärkter Bauteile für den Einsatz als Implantatmaterialien. Das Dokument beschreibt Verfahren und Vorrichtungen zum Drucken einer dreidimensionalen Faserstruktur. Eine Faserschicht wird auf eine Druckoberfläche gedruckt, indem Fasern durch mindestens eine Extrusionsdüse und auf die Druckoberfläche gedrückt werden. Die Extrusionsdüse und/oder Druckfläche werden während des Bedruckens der Fasern in X-, Y- und / oder Z-Richtung bewegt. Das Verfahren kann zur Herstellung medizinischer Bandagen, Herniennetzen, vaskulären Implantaten, Knie-Menisken oder Rotatorenmanschetten verwendet werden.

Die US 2018 0131 124 A1 beschreibt ein Verfahren zur Herstellung von 3D gedruckten Dichtungen unter anderem enthaltend verstärkende Füllstoffe. Das Dokument offenbart eine elektrische Verbinderanordnung für elektrische Tauchpumpen (ESPs) mit einer flüssigkeitsundurchlässigen die 3D-gedruckten Dichtung zwischen dem Stromkabel und einer inneren Gehäusekomponente der elektrischen Verbinderanordnung. Eine elektrische Isolierung oder ein Dielektrikum für einen Leiter des Stromkabels kann auch integral mit der Fluiddichtung 3D-gedruckt werden. Die Gehäusekomponente, beispielsweise ein internes elektrisches Gehäuse, kann auch integral mit der gedruckten Dichtung 3D-gedruckt werden. In ähnlicher Weise können in einer Implementierung die 3D-gedruckte Dichtung, die interne Gehäusekomponente und ein äußeres Köchergehäuse alle als eine Einheit auf das Stromkabel gedruckt werden. Die 3D-gedruckte Versiegelung und die damit verbundenen Kübelkomponenten können aus einer Vielzahl von chemikalienbeständigen Materialien bestehen, wie gedruckten Polyaryletherketonen, gedruckten fluorierten Polymeren und Metalllegierungen. Die 3D-gedruckte Dichtung kann auch Barrierematerialien oder Verstärkungsfüllstoffe enthalten, um Festigkeit und chemische Beständigkeit gegenüber Bohrlochflüssigkeiten und -gasen zu verbessern.

Die US 2016 0159 007 A1 beschreibt ein Verfahren zur Herstellung von Transportbändern für die Papierindustrie wobei mindestens ein Teil 3D gedruckt wird. Das Dokument offenbart ein Papierherstellungsband mit Materialzonen, die nacheinander mittels eines 3D-Druckverfahrens abgelegt werden. Die Zonen umfassen mindestens eine Taschenzone, die konfiguriert ist, um dreidimensionale Strukturen in einer Papierbahn zu bilden, indem ein Vakuum angelegt wird, um die Papierbahn gegen die Taschenzone zu ziehen. In mindestens einer beispielhaften Ausführungsform umfasst die Zone auch mindestens eine Vakuumunterbrechungszone, die konfiguriert ist, um eine Menge von Papierfasern zu begrenzen, die durch das angelegte Vakuum durch die Taschenzone gezogen werden.

Der Stand der Technik offenbart die Herstellung komplexer Werkstücke mittels 3D-Verfahren. Eine Herstellung gedruckter Erzeugnisse mit elastischen Verhalten und stark asymmetrischen mechanischen Eigenschaften offenbart der Stand-der-Technik hingegen nicht.

Es ist daher die Aufgabe der vorliegenden Erfindung komplexe 3D-gedruckte faserverstärkte elastische Erzeugnisse bereitzustellen, welche anisotrope und bevorzugt sehr stark anisotrope mechanische Eigenschaften aufweisen. Des Weiteren ist es die Aufgabe der vorliegenden Erfindung ein 3D-Druckverfahren zur Herstellung dieser speziell ausgestalteten Erzeugnisse sowie Möglichkeiten für deren Verwendung anzugeben.

Vorgeschlagen wird daher ein 3D-gedrucktes Erzeugnis gemäß Anspruch 1 und ein Verfahren gemäß Anspruch 11. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß ist ein faserverstärktes, 3D-gedrucktes elastisches Erzeugnis, wobei das Erzeugnis einen Gewichtsanteil von ≥ 50% eines Polymers mit einem mittleren Molekulargewicht (Mₙ) von ≥ 5.000 g/mol, gemessen mittels GPC, und einen Gewichtsanteil von ≥ 0,5 % und ≤ 20% einer oder mehrerer Fasern mit einem Aspektverhältnis von ≥ 100 und einer Länge von ≥ 3 cm und ≤ 1000 cm aufweist, wobei das Erzeugnis zumindest anteilig mittels eines FFF-(Free Filament Fabrication) Verfahrens hergestellt ist und das Erzeugnis im Bereich der Faserverstärkung und in Richtung der Fasersymmetrieachse einen Zugmodul nach DIN EN ISO 527-1 gemessen von ≥ 1,5 GPa aufweist.

Die Symmetrieachse einer Faser ist erfindungsgemäß parallel zur Längsachse der Faser, also parallel zur Faserachse mit der größten räumlichen Faserausdehnung. Dies wird im Folgenden näher beschrieben.

Die erfindungsgemäßen Erzeugnisse weisen gegenüber dem im Stand der Technik beschriebenen, gedruckten Erzeugnissen mehrere Vorteile auf. Basierend auf der Kombination aus den chemischen Eigenschaften des Basismaterials und basierend auf der Herstellung mittels 3D-Druck und zusätzlicher Faserverstärkung ergeben sich komplexe mechanische Eigenschaften des Erzeugnisses. Die gedruckten Erzeugnisse sind dem Grunde nach elastisch, wobei diese in Richtung der Symmetrieachse der miteingedruckten Fasern eine außerordentlich hohe Festigkeit und Steifheit aufweisen. Senkrecht zu diesen späteren Belastungsrichtungen weist das Erzeugnis eine außerordentlich hohe Elastizität, d.h. geringe Steifheit und/oder geringere Festigkeit, auf. In dieser Richtung ergibt sich zudem eine hohe reversible Verformbarkeit, welches für die wiederholte Belastung des Erzeugnisses ohne Bruch oder Ermüdung von großer Wichtigkeit ist. Das Erzeugnis zeigt also basierend auf dieser Zusammenstellung eine außerordentlich hohe Anisotropie in den mechanischen Eigenschaften, welches den erfolgreichen Einsatz dieser Erzeugnisse in völlig neuen Anwendungsbereichen ermöglicht. Die hohe Anisotropie in den mechanischen Eigenschaften kann sich beispielsweise durch deutlich unterschiedliche mechanische Parameter wie Modulanisotropie, Dämpfungsanisotropie, Streckspannungsanisotropie zeigen. Dabei deutet der Begriff "Anisotropie" an, dass diese mechanischen Werte zur Charakterisierung des Erzeugnisses als Funktion der Messrichtung nicht gleich, sondern deutlich unterschiedlich sind. Der Stand der Technik offenbart hingegen entweder elastische oder belastbare gedruckte Erzeugnisse mit einer mehr oder minder isotropen Lastaufnahmefähigkeit und/oder Materialversteifung. Dies kann in vielen Anwendungsbereichen nachteilig sein. Ohne durch die Theorie gebunden zu sein können sich insbesondere die hohen mechanischen Belastbarkeiten in Faserrichtung aus der Verwendung elastischer Grundpolymere im beanspruchten Molekulargewichtsbereich und den speziellen Dimensionen der eingearbeiteten Fasern ergeben.

Bei dem erfindungsgemäßen Erzeugnis handelt es sich um ein faserverstärktes, 3D-gedrucktes elastisches Erzeugnis. Ein 3D-gedrucktes Erzeugnis wurde zumindest partiell über ein 3D-Druckverfahren hergestellt. Dabei kann das gesamte oder nur ein Teilbereich des Erzeugnisses über einen 3D-Druck hergestellt worden sein. Mindestens einer der mittels 3D-gedruckten Abschnitte weist dabei neben dem gedruckten elastischen Polymer noch Fasern innerhalb der gedruckten Polymermatrix auf. D.h. dieser oder diese Abschnitte sind faserverstärkt in dem Sinne, dass innerhalb dieser Abschnitte des Erzeugnisses nicht nur ein 3D-gedrucketes Polymer, sondern eine 3D-gedrucktes Polymer mit mindestens einer integrierten Faser, mit den erfindungsgemäßen Abmessungen und Eigenschaften, vorliegt. Im Sinne der vorliegenden Erfindung ist ein Erzeugnis elastisch, wenn es eine Bruchdehnung im Zugversuchstest nach DIN 53504 von ≥ 50% zeigt. Das Erzeugnis kann beispielsweise einen Druckverformungsrest nach 10% Kompression (gemäß DIN ISO 815-1) von ≤ 50%, bevorzugt < 30%, besonders bevorzugt < 15% aufweisen.

Das Erzeugnis besteht zu einem Gewichtsanteil von ≥ 50% aus einem Polymer. Maßgeblich für die elastischen Eigenschaften des Erzeugnisses können die Anteile an Polymeren in Bezug auf die anderen Erzeugnisanteile sein. Mittels des hier offenbarten Verfahrens sind aber auch Erzeugnisse erhältlich, welche "hochgefüllt" sein können, d.h. dass diese neben dem Polymeren und den Fasern auch noch in signifikanten Anteilen andere Füllstoffe aufweisen können. Auch diese hochgefüllten Erzeugnisse sind von der Erfindung umfasst. Polymere im Sinne der Erfindung sind Makromoleküle, welche aus sich wiederholenden, gleichen Einheiten aufgebaut sind. Beispiele für verwendbare Polymere oder Polymermischungen sind weiter hinten aufgeführt. Die Gehaltsbestimmung ist dabei dem Fachmann bekannt und kann nach Auflösen des Erzeugnisses beispielsweise mittels Gelpermeationschromatographie (GPC) bei nicht vernetzten löslichen Polymeren erfolgen. Bei teils unlöslichen Polymeren durch Thermogravimetrie (TGA) nach selektiver thermischer Zersetzung um die Polymere von z.B. anorganischen höher zersetzenden Füllstoffen zu unterscheiden. Komplementär dazu können Elementaranalysen durchgeführt werden um die organischen Bestandteile im Vergleich zu anorganischen Bestandteilen zu quantifizieren.

Dem Fachmann sind die weiter einzusetzenden Untersuchungsmethoden zur Bestimmung der Gewichtsanteile bekannt. Für viele Anwendungen haben sich Polymergehalte von >55%, bevorzugt > 60%, des Weiteren bevorzugt >65%, und >70% als vorteilhaft zum Erhalt bevorzugter elastischer Erzeugniseigenschaften erwiesen.

Das Polymer weist ein mittleres Molekulargewicht (Mₙ) von ≥ 5.000 g/mol, gemessen mittels GPC auf. Mit dem mittleren Molekulargewicht ist das Zahlenmittel des Molekulargewichtes gemeint. Das eingesetzte Polymer kann eine Massenverteilung aufweisen, wobei der Quotient aus der Gesamtmasse und der Anzahl der Teilchen größer als der oben angegebene Wert sein muss. Die Verteilung und der Mittelwert der Verteilung können dabei mittels GPC am fertigen Erzeugnis bestimmt werden. Dazu wird das Erzeugnis zweckmäßigerweise aufgelöst und einer GPC unterzogen. Als Funktion des eingesetzten Polymers sind dem Fachmann die geeigneten GPC Bedingungen inklusive der zur Auflösung nutzbaren Lösemittel bekannt. Bevorzugt kann das Polymer auch ein mittleres Molekulargewicht von 10.000 g/mol, weiterhin bevorzugt von > 12.000 g/mol, und ebenfalls bevorzugt von > 15.000 g/mol und besonders bevorzugt von > 20.000 g/mol aufweisen. Im Fall von teilunlöslichen und teilvernetzten Polymeren (z.B. in Form eines polymerisierten organischen Füllstoffs oder Stippen in einer thermoplastischen Matrix) wird das Molekulargewicht der löslichen und durch Extrusion verarbeitbaren Matrix als maßgebend definiert, da zumindest teilvernetzten Anteile per Definition mit einem "unendlichen" Molekulargewicht angenommen werden können. Diese Molmassen können zu hinreichenden elastischen Eigenschaften des gedruckten Polymers führen. Sehr hohe mittlere Molekulargewichte > z.B. 5.000.000 g/mol sind dagegen nachteilhaft, da diese im Bereich des 3D-Druckens nur schlecht extrudiert werden können. Niedrige Molekulargewichte können nachteilhaft sein, da diese nur ungenügende elastische Eigenschaften aufweisen. Die GPC-Untersuchung kann beispielsweise in DMF bei 23°C und/oder 80°C auf einem Polystyrol/Divinylbenzol Säulenmaterial gegen PMMA als Standard durchgeführt werden.

Das Erzeugnis weist einen Gewichtsanteil von ≥ 0,5 % und ≤ 20% einer oder mehrerer Fasern auf. Fasern im Sinne der Erfindung sind dabei lineare Gebilde, welche aus einem Faserstoff bestehen und in der Regel eine definierte äußere Faserform oder -geometrie aufweisen. Beispiele für einsetzbare Fasertypen sind weiter hinten aufgeführt. Der Gewichtsanteil kann beispielsweise gravimetrisch nach Auflösen des Erzeugnisses und Trocknung der Fasern vom Lösemittel bestimmt werden. Dem Fachmann sind Lösungsmittel zum selektiven Auflösen des Polymers unter Erhalt der Faserintegrität bekannt. Alternativ kann der Fasergehalt über die oben erwähnten Methoden wie TGA und Elementaranalyse bestimmt werden. Weiterhin bevorzugt kann der Faser-Gewichtsanteil 1% bis 18%, besonders bevorzugt 1,5% bis 15% und ganz besonders bevorzugt 2% bis 12% betragen.

Die Fasern weisen ein Aspektverhältnis von ≥ 100 auf. Das Aspektverhältnis beschreibt dabei das Verhältnis aus der Tiefe bzw. Höhe einer Struktur zu ihrer (kleinsten) lateralen Ausdehnung. Besitzt die Faser einen variierenden Durchmesser oder eine variierende Länge so können für das Aspektverhältnis die Mittelwerte über die Fasergesamtheit eingesetzt werden. Die Fasern weisen bevorzugt eine Aspektverhältnis von größer oder 200, des Weiteren bevorzugt von größer 500, und weiterhin bevorzugt von größer als 1000 auf. Kleinere Aspektverhältnisse können nachteilig sein, da Erzeugnisse enthaltend diese Fasern nicht die geforderte mechanische Anisotropie aufweisen können.

Die erfindungsgemäß einsetzbaren Fasern weisen eine Länge von ≥ 3 cm und ≤ 1000 cm auf. Zum Erhalt eines 3D-gedruckten Erzeugnissen mit stark anisotropen mechanischen Eigenschaften hat sich dieser Faserlängenbereich als besonders geeignet erwiesen. Der Bereich gibt an, dass mindestens 95% der Faseranzahl eine Länge innerhalb des oben angegebenen Bereiches aufweist, also innerhalb des Bereiches liegen. Ein gewisser Anteil kleinerer Faserlängen, beispielsweise erhalten durch Faserbruch während der Herstellung, ist ebenso erfindungsgemäß. Mit diesen Faserlängen lassen sich sowohl äußerst stabile 3D-gedruckte Erzeugnisse erhalten, welche aufgrund der Fasereigenschaften in Verbindung mit den genutzten Polymeren, ein hohe Anisotropie in den mechanischen Eigenschaften zeigen. Bevorzugt können die Fasern weiterhin > 7 cm und < 500 cm; des Weiteren bevorzugt > 10 cm und < 100 cm lang sein.

Das Erzeugnis ist zumindest anteilig mittels eines FFF-(Fused Filament Fabrication) Verfahrens hergestellt. Das extrudierte Polymer kann dabei gegebenenfalls in einem nachgeschalteten Prozess nachvernetzet werden. Die Nachvernetzung kann dabei durch Reaktion des Polymers mit Wasser in folgen einer Umsetzung von z.b. Isocyanatgruppen zu Harnstoffen und/oder durch Strahlenhärtung und/oder durch Temperung bei Temperaturen mindestens oberhalb des Glaspunktes des Polymeren erfolgen. Die Formgebung des Erzeugnisses ist aber ganz oder teilweise über ein 3D-Druckverfahren erfolgt, wobei zumindest ein Bereich des Erzeugnisses, welcher eine Faserverstärkung aufweist, über das 3D-Druckverfahren hergestellt worden sein muss. Als Herstellungsverfahren wird erfindungsgemäß die "fused Filament Fabrication", also die Herstellung über geschmolzene (polymere) Filamente genutzt. Es ist auch im Sinne der Erfindung, dass Teilbereiche des Erzeugnisses nicht durch ein 3D-Druckverfahren hergestellt wurden. Es können sich also Erzeugnisse ergeben, welche isoliert ein oder mehrere Abschnitte mit den im unabhängigen Anspruch geforderten Materialeigenschaften aufweisen.

Das Erzeugnis weist im Bereich der Faserverstärkung und in Richtung der Fasersymmetrieachse einen Zugmodul nach DIN EN ISO 527-1 gemessen von ≥ 1,5 GPa auf. Im Bereich der Faserverstärkung bedeutet erfindungsgemäß, dass die mechanischen Eigenschaften an den Stellen des Erzeugnisses gemessen werden, welche eine Faserverstärkung aufweisen. Dazu können Proben aus diesem Bereichen genommen und der mechanischen Analyse unterzogen werden. Werte erhalten durch Messungen an Bereichen ohne Faserverstärkung sind nicht erfindungsgemäß. Der gemessene Probenkörper muss dementsprechend mindestens eine Faser aufweisen oder beinhalten. Im Falle produktionsbedingter Streuungen der Module zählt erfindungsgemäß der Mittelwert an drei unterschiedlichen Stellen des Erzeugnisses gemessener Proben. Die Module werden am fertigen Erzeugnis, also ggf. nach weiteren Behandlungsschritten wie Tempern/Abkühlen/Nachvernetzen erhoben.

Die Symmetrieachse einer Faser ist erfindungsgemäß parallel zur Längsachse der Faser, also parallel zur Faserachse mit der größten räumlichen Faserausdehnung, wie oben beschrieben. Ist die Faser innerhalb des Erzeugnisses nicht monoton ausgerichtet, so ergibt sich die Symmetrieachse der Faser als Mittelwert der einzelnen Segment-Symmetrieachsen. Erfindungsgemäß ergibt sich der Zugmodul in Richtung der Fasersymmetrieachse auch für die Fälle, in denen die Abweichungen zwischen Messrichtung und Fasersymmetrieachse kleiner als 20°, bevorzugt kleiner als 10°, des Weiteren kleiner als 5° beträgt. Innerhalb dieser Abweichungen können trotzdem die Anforderungen an die Anisotropie und Elastizität des Erzeugnisses erfüllt sein. Innerhalb bevorzugter Ausführungsformen kann der Modul in Symmetrieachsenrichtung größer als 1,7 GPa, weiterhin bevorzugt > 2GPa, des Weiteren bevorzugt > 3 GPa, und ebenfalls bevorzugt > 4 GPa am fertigen Produkt betragen. Innerhalb dieser Modul-Größenordnungen können hohe Belastungen durch das Erzeugnis aufgenommen werden. Kleinere Module als 1,5 GPa können nachteilig sein, da den Erzeugnissen aufgrund einer zu hohen Elastizität die geforderte mechanische Stabilität fehlen kann.

In einer bevorzugten Ausführungsform kann das Erzeugnis im Bereich der Faserverstärkung und senkrecht zur Fasersymmetrieachse einen Zugmodul nach DIN EN ISO 527-1 gemessen von ≤ 1,2 GPa aufweisen. Die Messung erfolgt am fertigen Produkt also ggf. nach weiteren Verarbeitungsschritten wie beispielsweise Tempern/Abkühlen/Vernetzen, welche die mechanischen Eigenschaften des Erzeugnisses noch beeinflussen können. Die Messung des Zugmoduls erfolgt senkrecht zur Fasersymmetrieachse, wenn die mittlere Ausrichtung die im Probenkörper vorhandenen Fasern einen Winkel von größer oder gleich 75° und kleiner oder gleich 105° zur Messrichtung einschließen. Die Messung erfolgt im Bereich der Faserverstärkung, wenn der vermessene Probenkörper mindestens eine der erfindungsgemäßen Fasern aufweist. Bevorzugt kann das Zugmodul auch < 1,0 GPa, bevorzugt < 0,8 GPa, kleiner als 0,6 GPa, und des Weiteren bevorzugt < 0,4 GPa sein. Diese Grenzen im Zugmodul haben sich zum Erhalt stark anisotroper Werkstücke bewährt. Niedrigere Module als < 0,05 GPa können nachteilhaft sein, da den Erzeugnissen in diesen Fällen die nötige Festigkeit fehlen kann. Höhere Module können zu einer nicht erfindungsgemäßen, nur geringen Anisotropie des Erzeugnisses führen.

In einer bevorzugten Ausführungsform kann das Erzeugnis an wenigstens einem räumlichen Abschnitt rotationsymmetrisch und die Symmetrieachse der Fasern senkrecht zur Symmetrieachse des Erzeugnisses ausgerichtet sein. Das Erzeugnis kann somit insgesamt rotationssymmetrisch sein oder bei komplexen Erzeugnissen mit mehreren aneinandergesetzten Formen ein Teil des Erzeugnisses. Beispiele für diese bevorzugten Ausführungsformen sind beispielsweise O-Ringe oder Keilriemen, wobei diese Strukturen rotationssymmetrisch sind und die Symmetrieachse durch den Mittelpunkt des Erzeugnisses verlaufen. Eine bevorzugte Materialkombination für O-Ringe wäre TPU/Polyaramidfaser. Die Symmetrieachse der Fasern verläuft für diese Erzeugnisse parallel zum Umfang der Erzeugnisse und damit senkrecht zur Symmetrieachse des Erzeugnisses. Beide Symmetrieachsen sind erfindungsgemäß in den Fällen senkrecht zueinander, wenn diese einen Winkelbereich größer oder gleich 75° und kleiner oder gleich 105° zueinander einschließen. Dieser geometrische Zusammenhang kann zu besonders geeigneten Erzeugnissen führen, welche eine ausgezeichnete Festigkeit in Lastrichtung und eine hohe Elastizität aufweisen.

Innerhalb einer weiteren Ausgestaltung kann das Erzeugnis ein Aspektverhältnis von ≥ 1 aufweisen und die Symmetrieachse der Fasern im Wesentlichen in einer Ebene mit der Erzeugnisachse mit der größten Ausdehnung liegt. Die erfindungsgemäßen Erzeugnisse mit den anisotropen mechanischen Eigenschaften eignen sich im besonderen Maße zur Fertigung von Erzeugnissen mit unsymmetrischen Abmessungen, wobei die mechanische Faserstabilisierung der Erzeugnisse in einer Ebene mit der größten Erzeugnisausdehnung liegt. Dadurch kann das Erzeugnis durch die Fasereinlagerung maximal stabilisiert werden. In weiter bevorzugten Ausführungsformen kann das Erzeugnis ein Aspektverhältnis von > 3, bevorzugt > 5, des Weiteren bevorzugt > 10 und weiterhin bevorzugt > 15 betragen.

Innerhalb einer weiteren Charakteristik kann das Erzeugnis im Bereich der Faserverstärkung einen Verlustfaktor tan δ von ≤ 0,07, gemessen mittels mechanisch dynamischer Analyse (DMA) in Zugbeanspruchung, und eine Streckgrenze in Richtung der Fasersymmetrieachse von < 7% gemessen nach DIN EN ISO 527-1 aufweisen. Diese mechanischen Eigenschaften des Erzeugnisses tragen bevorzugt zu einer hohen Festigkeit und Belastbarkeit des Erzeugnisses in Faserrichtung bei. Als Grund für die geringe Streckgrenze und den erfindungsgemäßen Verlustfaktor kann dabei in der Kombination aus den erfindungsgemäß einsetzbaren Fasern und den elastischen Polymer gesehen werden. Höhere Streckgrenzen können nachteilig sein, da das gedruckte Erzeugnis in diesen Fällen nur einen ungenügenden Widerstand gegenüber einer mechanischen Belastung des Erzeugnisses ausweisen kann. Bevorzugt kann der Verlustfaktor < 0,06, bevorzugt < 0,05, des Weiteren < 0,04 und weiterhin bevorzugt < 0,03 betragen. Diese Verlustfaktoren können zu einer besonders starken Anisotropie der mechanischen Eigenschaften des Erzeugnisses beitragen. Die Streckgrenze kann dabei bei 23°C bestimmt werden und bevorzugt kann die Streckgrenze auch < 3%, besonders bevorzugt < 2% und ganz besonders bevorzugt < 1% betragen.

Weiterhin bevorzugt kann das Erzeugnis im Bereich der Faserverstärkung und senkrecht zur Fasersymmetrieachse eine Streckgrenze von > 5% gemessen nach DIN EN ISO 527-1 aufweisen. Zum Erhalt von Erzeugnissen mit möglichst hoher mechanischer Anisotropie haben sich oben angegebene Streckgrenzen als besonders vorteilhaft herausgestellt. Durch diese Streckgrenzen kann das Erzeugnis für viele Einsatzbereiche hinreichend elastisch ausgerüstet werden, sodass sich in der Anwendung bevorzugte Gebrauchseigenschaften ergeben. Beispielsweise können Zahnschienen aufgrund der hohen Streckgrenze einfach eingesetzt und wieder entnommen werden. Bevorzugt kann die Streckgrenze auch > 7%, weiterhin bevorzugt > 9%, des Weiteren bevorzugt > 11% und ebenfalls >15% betragen.

Innerhalb eines weiteren Aspektes des Erzeugnisses kann das Polymer ein thermoplastisches Elastomer sein. Thermoplastische Elastomere (TPE) sind Werkstoffe, bei denen elastische Polymerketten in thermoplastisches Material eingebunden sind. Sie lassen sich in einem rein physikalischen Prozess in Kombination von hohen Scherkräften, Wärmeeinwirkung und anschließender Abkühlung verarbeiten. Obwohl keine chemische Vernetzung durch eine zeit- und temperaturaufwendige Vulkanisation, wie bei den Elastomeren, notwendig ist, haben die hergestellten Teile aufgrund ihrer besonderen Molekularstruktur doch gummielastische Eigenschaften. Erneute Wärme- und Scherkrafteinwirkung führt wieder zur Aufschmelzung und Verformung des Materials. Das bedeutet aber zugleich, dass die TPE weit weniger thermisch und dynamisch belastbar sind als Standard-Elastomere. Die TPE sind also kein "Nachfolge-Produkt" konventioneller Elastomere, sondern eine Ergänzung, die die Verarbeitungsvorteile der Thermoplaste mit den Werkstoffeigenschaften der Elastomere verbindet.

Thermoplastische Elastomere weisen in Teilbereichen physikalische Vernetzungspunkte (Nebenvalenzkräfte oder Kristallite), die sich bei Wärme auflösen, ohne dass sich die Makromoleküle zersetzen, auf. Daher lassen sie sich wesentlich besser verarbeiten als normale Elastomere. So können auch Kunststoffabfälle wieder eingeschmolzen und weiter verarbeitet werden. Dies ist allerdings auch der Grund dafür, dass sich die Werkstoffeigenschaften von thermoplastischen Elastomeren nichtlinear über Zeit und Temperatur verändern. Die beiden wesentlichen messbaren physikalischen Werkstoffeigenschaften sind der Druckverformungsrest und die Spannungsrelaxation. Gegenüber Ethylen-Propylen-Dien-Kautschuk (EPDM) besitzen sie im Kurzzeitverhalten schlechtere Materialeigenschaften, außerdem ist der Rohstoff teurer. Im Langzeitverhalten kehrt sich das Bild gegenüber EPDM allerdings um.

Da der Verarbeitungsprozess im Prinzip dem der thermoplastischen Kunststoffe gleicht, sind ähnlich kurze Zykluszeiten möglich. In der Herstellung gewinnen thermoplastische Elastomere vermehrt Anwendung in Karosseriedichtungen von Automobilen sowie in Bauelementen. Sie können extrudiert, spritzgeformt oder auch blasgeformt werden und werden in der Regel gebrauchsfertig bezogen.

Nach dem inneren Aufbau unterscheidet man Copolymere und Elastomerlegierungen.

Copolymere kommen entweder als statistische oder als Blockcopolymere zum Einsatz. Erstere bestehen aus einem kristallisierenden (und damit physikalisch vernetzenden) Hauptpolymer wie z. B. Polyethylen, dessen Kristallisationsgrad durch ein zufällig entlang der Kette eingebautes Comonomer wie z. B. Vinylacetat soweit verringert ist, dass die Kristallite (= die harte Phase) im fertigen Werkstoff (im Beispiel EVA) keinen direkten Kontakt mehr haben. Sie wirken dann wie in herkömmlichen Elastomeren als isolierte Vernetzungspunkte.

In Blockcopolymeren sind die Hart- und Weichsegmente in einem Molekül scharf getrennt (z. B. SBS, SIS). Bei TPEs entmischt sich unterhalb einer gewissen Temperatur das Material in eine kontinuierliche und eine diskontinuierliche Phase. Sobald letztere ihre Glasübergangstemperatur Tg unterschreitet (der Tg der kontinuierlichen Phase liegt deutlich unterhalb der späteren Anwendungstemperatur), wirkt sie wiederum als Vernetzungspunkt.

Elastomerlegierungen sind Polyblends, also Zusammenmischungen (Gemenge) fertiger Polymere. Der Kunststoff besteht also aus mehreren Molekülsorten. Durch unterschiedliche Mischungsverhältnisse und Zuschlagmittel erhält man maßgeschneiderte Werkstoffe (beispielsweise Polyolefin-Elastomer aus Polypropylen (PP) und Naturgummi (NR) - je nach Mengenverhältnis decken sie einen weiten Härtebereich ab).

Man unterscheidet folgende Gruppen:
- TPE-A oder TPA = Thermoplastische Copolyamide, z. B. PEBAX (Arkema)
- TPE-E oder TPC = Thermoplastische Polyesterelastomere / Thermoplastische Copolyester, z. B. Keyflex (LG Chem)
- TPE-O oder TPO = Thermoplastische Elastomere auf Olefinbasis, vorwiegend PP/EPDM
- TPE-S oder TPS = Styrol-Blockcopolymere (SBS, SEBS, SEPS, SEEPS und MBS), z. B. Kraton (Kraton Polymers), Septon (Kuraray), Styroflex (BASF), Thermolast (Kraiburg TPE) oder Saxomer (PCW)
- TPE-U oder TPU = Thermoplastische Elastomere auf Urethanbasis, z. B. Elastollan (BASF) oder Desmopan, Texin, Utechllan (Covestro)
- TPE-V oder TPV = Thermoplastische Vulkanisate oder vernetzte thermoplastische Elastomere auf Olefinbasis, vorwiegend PP/EPDM, z. B. Sarlink (DSM)
kursiv geschriebene Bezeichnungen nach ISO 18064
Thermoplastische Elastomere können beispielsweise auch ausgewählt sein aus der Gruppe: thermoplastische Copolyamide (TPA), thermoplastische Copolyester (TPC), thermoplastische Elastomere auf Olefinbasis (TPO), Styrol-Blockcopolymere (TPS), thermoplastische Elastomere auf Urethanbasis (TPU), vernetzte thermoplastische Elastomere auf Olefinbasis (TPV), thermoplastische Elastomere auf Polyvinylchlorid-Basis (PVC), thermoplastische Elastomere auf Silikon-Basis oder einer Kombination aus mindestens zwei dieser Elastomere. Möglich sind auch Kombinationen aus ≥ 3, ≥ 4 oder ≥ 5 dieser Elastomere. Das elastische Polymer kann noch weitere Additive wie Füllstoffe, Stabilisatoren und dergleichen, aber auch weitere Polymere, enthalten. Der Gesamtgehalt an Additiven im elastischen Polymer kann beispielsweise ≥ 0,1 Gewichts-% bis ≤ 70 Gewichts-%, bevorzugt ≥ 1 Gewichts-% bis ≤ 50 Gewichts-%, betragen. Diese Gruppe thermoplastischer Elastomere kann im hohen Maße zu Erzeugnissen mit großer mechanischer Anisotropie beitragen.

In einer weiteren bevorzugten Ausführungsform der erfindungsgemäßen Verwendung ist das Elastomer ein thermoplastisches Elastomer und weist einen Schmelzbereich (DSC, Differential Scanning Calorimetry; zweite Aufheizung mit Aufheizrate 20 K/min) von ≥ 20 ° C bis ≤ 280 ° C (bevorzugt ≥ 40 ° C bis ≤ 250 ° C, mehr bevorzugt ≥ 50 ° C bis ≤ 220 ° C) auf, eine Shore A Härte gemäß DIN ISO 7619-1 von ≥ 40 bis ≤ 98 (bevorzugt ≥ 50 bis ≤ 95, mehr bevorzugt ≥ 60 bis ≤ 90) auf und eine Schmelzvolumenrate (melt volume rate, MVR) gemäß ISO 1133 (gemessen 120° C oberhalb des Schmelzpunktes, 10 kg) von ≥ 5 bis ≤ 200 (bevorzugt ≥ 10 bis ≤ 150, mehr bevorzugt ≥ 15 bis ≤ 100) cm³/10 min auf.

Innerhalb einer bevorzugten Ausgestaltung des Erzeugnisses kann das Polymer ein Polyurethan oder ein Kautschuk sein. Der Kautschuk kann dabei das Basismaterial darstellen und vor Härtung oder Vulkanisation eingesetzt werden. In der Technik werden als Gummi (der, Mehrzahl Gummis) die Vulkanisate von Natur- und Synthesekautschuken bezeichnet. (Jürgen Falbe, Manfred Regitz (Hrsg.): CD Römpp Chemie Lexikon, Thieme, Stuttgart, 1995). Diese Auswahl an Polymeren kann zu besonders elastischen und mechanisch stark anisotropen Erzeugnissen führen.

Das thermoplastische Elastomer kann in einer bevorzugten Ausführungsform ein thermoplastisches Polyurethanelastomer sein.

In einer weiteren bevorzugten Ausführungsform der erfindungsgemäßen Verwendung ist das Elastomer ein thermoplastisches Polyurethanelastomer, das erhältlich ist aus der Reaktion der Komponenten:
a) mindestens ein organisches Diisocyanat
b) mindestens eine mit gegenüber Isocyanatgruppen reaktiven Gruppen aufweisenden Verbindung mit einem zahlenmittleren Molekulargewicht (Mn) von ≥ 500 g/mol bis ≤ 6000 g/mol und einer zahlenmittleren Funktionalität der Gesamtheit der Komponenten unter b) von ≥ 1,8 bis ≤ 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'- Diphenylmethandiisocyanate oder 2,4'- Diphenylmethandiisocyanate, 4,4'-Diisocyanatodiphenylethan-(1 ,2) und 1,5-Naphthylendiisocyanat. Vorzugsweise verwendet werden 1 ,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl- diethanolamine, beispielsweise N-Methyl-diethanolamin und Diole wie Ethylenglykol, 1,3- Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol- 1,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(b-hydroxyethyl)-hydrochinon, ethoxylierte Bisphenole, z.B. 1,4-Di(b-hydroxyethyl)- bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten monofunktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die erfindungsgemäß verwendeten thermoplastischen Polyurethanelastomere können als Hilfs- und/oder Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

Erfindungsgemäß geeignete Polyurethan-Elastomere können beispielsweise 2-Komponenten-Gießelastomere ("cast elastomers") sein. Sie können nach bekannten Methoden erhalten werden aus einer Reaktionsmischung umfassend:
a) mindestens ein organisches Polyisocyanat
b) mindestens eine mit gegenüber Isocyanatgruppen reaktiven Gruppen aufweisenden Verbindung mit einem zahlenmittleren Molekulargewicht (Mn) von ≥ 500 g/mol bis ≤ 6000 g/mol und mindestens einer zahlenmittleren Funktionalität der Gesamtheit der Komponenten von ≥ 2,1
c) optional mindestens ein Kettenverlängerungsmittel mit einem Molekulargewicht (Mn) von 60 - 450 g/mol.
Zu Details bezüglich Polyisocyanaten und NCO-reaktiven Verbindungen sei auf die voranstehenden Ausführungen verwiesen.

In einer weiteren bevorzugten Ausführungsform der erfindungsgemäßen Verwendung ist das Elastomer ein thermoplastisches Elastomer und weist einen Schmelzbereich (DSC, differential scanning calorimetry; 2. Aufheizung mit Aufheizrate 5 K/min.) von ≥ 20 ° C bis ≤ 100 ° C auf und weist einen Betrag der komplexen Viskosität |η*| (bestimmt durch Viskosimetriemessung in der Schmelze mit einem Platte/Platte-Oszillationsscherviskosimeter bei 100 °C und einer Scherrate von 1/s) von ≥ 10 Pas bis ≤ 1000000 Pas auf.

Dieses thermoplastische Elastomer weist einen Schmelzbereich von ≥ 20 ° C bis ≤ 100 ° C, vorzugsweise von ≥ 25 ° C bis ≤ 90 ° C und mehr bevorzugt von ≥ 30 ° C bis ≤ 80 ° C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 20 ° C, bevorzugt ≤ 10 ° C und mehr bevorzugt ≤ 5 ° C beträgt.

Dieses thermoplastische Elastomer weist ferner einen Betrag der komplexen Viskosität |η*| (bestimmt durch Viskosimetriemessung in der Schmelze mit einem Platte/Platte-Oszillationsviskosimeter gemäß ISO 6721-10 bei 100 ° C und einer Scherrate von 1/s) von ≥ 10 Pas bis ≤ 1000000 Pas auf. Vorzugsweise beträgt |η*| ≥ 100 Pas bis ≤ 500000 Pas, mehr bevorzugt ≥ 1000 Pas bis ≤ 200000 Pas.

Der Betrag der komplexen Viskosität |η*| beschreibt das Verhältnis der viskoelastischen Moduln G' (Speichermodul) und G" (Verlustmodul) zur Anregungsfrequenz ω in einer dynamischmechanischen Materialanalyse:
Dieses thermoplastische Elastomer ist vorzugsweise ein thermoplastisches Polyurethan-Elastomer. In einer weiteren bevorzugten Ausführungsform des erfindungsgemäßen Erzeugnisses ist das Elastomer ein thermoplastisches Polyurethanelastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 ° C aufweist.

Gegebenenfalls können bei der Reaktion zu diesem Polyurethan weiterhin Diole des Molekulargewichtsbereichs von ≥ 62 bis ≤ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe umfassend: 2,2,4-Trimethyl-hexamethylendiisocyanat, Ethylethylendiisocyanat, nicht-symmetrische Isomere des Dicyclohexylmethandiisocyanat (H12-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-risocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4 '-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Diese Polyolkomponente kann ein Polyesterpolyol aufweisen, welches einen Stockpunkt (No Flow Point, ASTM D5985) von ≥ 25 ° C, vorzugsweise ≥ 35 ° C, mehr bevorzugt ≥ 35 ° C bis ≤ 55 ° C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen α,ω-C4- bis C10-Dicarbonsäuren mit einem oder mehreren C2- bis C10-Diolen. Sie weisen bevorzugt ein zahlenmittleres Molekulargewicht Mn von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht Mn (GPC, gegen Polystyrol-Standards) von ≥ 4000 g/mol bis ≤ 6000 g/mol aufweist. Solch ein Polyurethan kann einen Betrag der komplexen Viskosität |η*| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

Weitere Beispiele für geeignete Polyurethane sind:
Weitgehend lineare, endständige Hydroxylgruppen aufweisende Polyesterpolyurethane wie in EP 019 294 6 A1 beschrieben, hergestellt durch Umsetzung von
a) Polyesterdiolen eines über 600 liegenden Molekulargewichts und gegebenenfalls
b) Diolen des Molekulargewichtsbereichs von 62 bis 600 g/mol als Kettenverlängerungsmittel mit
c) aliphatischen Diisocyanaten
unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den vorher genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den vorher genannten Polyesterpolyurethanen ist ferner bevorzugt, dass die Komponente c) IPDI und weiterhin HDI enthält.

In den vorher genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 ° C bei einer Abkühlrate von 4 ° C/min in einem Temperaturintervall von 25 ° C bis 40 ° C für ≥ 1 Minute (bevorzugt ≥ 1 Minute bis ≤ 30 Minuten, mehr bevorzugt ≥ 10 Minuten bis ≤ 15 Minuten), ein Speichermodul G ' (bestimmt bei der jeweils herrschenden Temperatur mit einem Platte/Platte-Oszillationsviskosimeter gemäß ISO 6721-10 bei einer Scherrate von 1/s) von ≥ 100 kPa bis ≤ 1 MPa auf und nach Abkühlen auf 20 ° C und Lagerung für 20 Minuten ein Speichermodul G ' (bestimmt bei 20 ° C mit einem Platte/Platte-Oszillationsviskosimeter gemäß ISO 6721-10 bei einer Scherrate von 1/s) von ≥ 10 MPa aufweist.

Einsetzbare Materialien können beispielsweise aus natürlichem oder synthetischem Kautschuk bestehen oder diese enthalten.

Der synthetische Kautschuk kann vorzugsweise ausgesucht sein aus der Gruppe bestehend aus Thiokol Gummi oder Kautschuk, EVA (Ethylen Vinylacetat Copolymer Gummi), FPVC (Flexibles Polyvinylchlorid Gummi), FZ Gummi (Fluoriniertes Polyphosphazen Gummi), GPO (Propylenoxide Gummi), HNBR (Hydriertes Nitrilbutadien Gummi), HSN (Hochgesättigtes Nitril Gummi), ACM (Acryl Gummi), VAMAC (Polethylen Co acryl-Acrylsäure Gummi), PNR (Polynorboran Gummi), PZ (Polyphosphazen Gummi), ABR (Acrylat-butadien Gummi), ACM Gummi (Copolymer des Ethyls oder anderer Acrylate mit einem kleinen Anteil an einem vulkanisierenden Monomer, AECO Gummi (Terpolymer des Allylglycidylethers, Ethylenoxids und Epichlorhydrin), AEM Gummi (Copolymer des Ethyls oder anderer Acrylate und Ethylene), AFMU Gummi (Terpolymer des Tetrafluorethylens, Trifluoronitromsomethane und Nitrosoperfluorobutyric), ANM Gummi (Copolymer des Ethyls oder anderer Acrylate und Acrylonitril), AU (Polyester Urethan Gummi), BIIR (Brom-Isobuten-Isopren Gummi (brom-butyl Gummi), BR (Butadien Gummi), CFM (Polychlorotrifluorethylen Gummi), CIIR (Chlor-Isobuten-Isopren Gummi (chloro Gummi), CM (Chlorinated Polyethylene Gummi), CO (Epichlorhydrin Gummi), CR (Chloropren Gummi), CSM (Chlorsulphoniertes Polyethylen Gummi), ECO (Ethylenoxid und Epichlorhydrin Copolymer Gummi), EAM (Ethylen-Vinylacetat Copolymer Gummi), EPDM (Terpolymer des Ethylens, Propylens und eines Dienes mit einer verbleibenden Menge des ungesättigten Diens in der Seitenkette des Gummis), EPM Ethylen-Propylen Copolymer Gummi), EU (Polyether Urethan Gummi), FFKM (Perfluor Gummi des Polymethylen-Typs mit sämtlichen Substituenten der Polymerkette entweder Fluor, Perfluoralkyl oder Perfluoroalkoxy-Gruppen), FKM (Fluor- Gummi des Polymethylen-Typs mit Substituenten Fluor und Perfluoralkoxy-Gruppen an der Hauptkette), FVMQ (Silicon Gummi mit Fluor, Vinyl und Methyl Substituenten an der Polymerkette), GPO (Polypropylenoxid Gummi), IIR (Isobuten-Isopren Gummi (Butyl Gummi)), IM (Polyisobuten Gummi), IR (Isopren Gummi (synthetisch)), MQ (Silikon Gummi mit nur Methylsubstituenten an der Polymerkette), NBR (Nitril-Butadien Gummi (Nitril Gummi)), NIR (Nitril-Isopren Gummi), PBR (Pyridin-Butadien Gummi), PMQ (Silicon Gummi mit nur Methyl- und Phenyl-Gruppen an der Polymerkette), PSBR (Pyridin-Styren-Butadien Gummi), PVMQ (Silikon Gummi mit Methyl-, Phenyl- und Vinylsubstituenten an der Polymerkette), Q (Gummi mit Silikon in der Polymerkette), SBR (Styren-Butadien Gummi), T (Gummi mit Schwefel in der Polymerkette (ohne CR-basierende Copolymere)), VMQ (Silikon Gummi mit Methyl- und Vinyl-Substituenten in der Polymerkette), XNBR (Carboxyl-Nitril Butadien Gummi (Carboxynitril Gummi)), XSBR (Carboxyl-Styrene Butadien Gummi).

Bevorzugt kann der Kautschuk auch aus zwei Komponenten bestehen oder diese enthalten.

Bevorzugt kann das erste Material oder das weitere Material eine Komponente aus Gruppe aufweisen bestehend aus Polyacryl Gummi (ACM), Styren-Butadien-Gummi (SBR), Polysiloxan (SI), Vinyl Methyl Silikon (VMQ), Nitril-Gummi (NR), Hydriertes Nitril Gummi, (HNBR), Carboxyliertes Nitril Gummi (XNBR), Carboxyliertes hydriertes Nitril Gummi (XHNBR), Ethylenpropylen Copolymer Gummi (EPDM), Polychloropren Gummi (CR), Vamac, Fluoriertes Gummi (FKM), Isobutylen Gummi (IIR), Polybutadien Gummi (BR) oder ein Mischung wenigstens zweier dieser Komponenten.

In einer bevorzugten Ausführungsform kann der synthetische Kautschuk weitere Additive enthalten ausgewählt sein aus der Gruppe bestehend aus organischen oder anorganischen Füllstoffen, ein Weichmacher, ein Metalloxid, Antiabbaumittel (gegen Oxidation, Hydrolyse, Vergilbung, Ozonangriff usw.), Prozesshilfsmittel, Silane, ein Coagens und ein Härtungsmittel oder eine Kombination von mindestens zwei davon. Beispiele für einen anorganischen Füllstoff sind Carbon Black N330 oder Siliciumdioxid, geschnittene Glasfasern/zerkleinerte Kohlenstoffasern/zerkleinerte Naturfasern, für einen Weichmacher sind Phthalatester wie Dioctylphthalat, für ein Metalloxid ist ZnO, für ein Antiabbaumittel Irganox 1010 (Pentaerythrit Tetrakis (3- (3,5-Di-tert.-butyl-4-hydroxyphenyl)-propionat)), für ein Verfahrenshilfsmittel Stearinsäure, als Coagens Polybutadien, Triallylisocyanurat (TAIC) oder deren Gemische, für einen Vernetzer Di (tert-butylperoxyisopropyl)benzol wie Perkadox 14/40.

Nach Vulkanisation oder Härtung des Kautschuks kann dieser als Gummi bezeichnet werden. In der Literatur und in der Bezeichnung von Rohstoffen wird der Begriff Kautschuk und Gummi allerdings häufig synonym verwendet. Wesentlich ist, dass die erfindungsgemäßen Rohstoffe im unvernetzten, unvulkanisierten, ungehärteten Zustand mittels eines additiven Fertigungsprozesses in die gewünschte Form gebracht und erst in einem anschließenden Prozessschritt, üblicherweise durch Temperaturlagerung, ausgehärtet, vernetzt, vulkanisiert werden.

In einer bevorzugten Ausführungsform des Erzeugnisses können die Fasern ausgesucht sein aus der Gruppe bestehend aus Glas-, Carbon-, Basalt-, Polyester-, Polyethylen-, Polyurethan, Polyamid-, Polyaramid-, Metall-, Cellulose-Fasern oder Mischungen daraus. In einer besonderen Ausführungsform können das Polymer und die Faser der gleichen polymeren Materialklasse angehören, wobei die Verarbeitung der Faser im additiven Fertigungsprozess allerdings immer unterhalb der Schmelztemperatur Tm der Faser erfolgt. Diese Fasern sind in der Lage eine ausreichende mechanische Festigkeit der Erzeugnisse bereitzustellen und liefern zudem die gewünschte mechanische Anisotropie des Erzeugnisses. Erfindungsgemäß geeignete organische Fasern sind Aramidfasern, Kohlenstofffasern, Polyester-Fasern, Nylon-Fasern, Rayon sowie Plexiglas-Fasern. Erfindungsgemäß geeignete Naturfasern sind Flachs-Fasern, Hanf-Fasern, Holzfasern, Baumwollfasern, Cellulosefasern sowie Sisalfasern. In einer besonderen Ausführungsform der Anmeldung sind die Fasern transparent gegenüber sichtbarem Licht. Dies ist besonders vorteilhaft, wenn im Rahmen des erfindungsgemäßen Bauteils die Bauteilbelastung, Bauteilintegrität und Bauteileigenschaften mittels Lichtinterferenzmessung vor und/oder während des Einsatzes des Bauteils entlang der Faser gemessen werden soll.

Gemäß einer bevorzugten Ausführungsform der Erfindung kann eine Faser ausgewählt aus der Gruppe bestehend aus Glasfasern, Aramidfasern, Basaltfasern, Kohlenstofffasern und deren Mischungen eingesetzt werden. Gemäß einer besonders bevorzugten Ausführungsform der Erfindung werden als faserförmige Füllstoffe Glasfasern und/ oder Kohlenstofffasern, insbesondere Glasfasern eingesetzt.

Weiterhin bevorzugt kann die Faser aus der Gruppe Glas-, Polyester-, Polyurethan-, PolyamidFasern sowie deren Mischungen ausgesucht sein.

In einer weiteren besonderen Ausführungsform können erfindungsgemäße Fasern verschiedener Materialklassen nebeneinander eingesetzt werden.

In einer weiteren besonderen Ausführungsform können erfindungsgemäße Fasern einer Länge ≥ 3cm und nichterfindungsgemäße Fasern einer Länge ≤ 3cm nebeneinander eingesetzt werden.

Erfindungsgemäß können Fasern aller Materialklassen und Längen nebeneinander eingesetzt werden, solange mindestens die Summe erfindungsgemäßer Fasern mit einer Faserlänge ≥ 3cm einen Gewichtsanteil von 1,5% überschreitet und der erfindungsgemäße Gegenstand die beanspruchten anisotropen Eigenschaften bezüglich des Moduls aufweist.

Weiterhin für das Erzeugnis bevorzugt kann der Unterschied im Brechungsindex ΔRI der Fasern und des Polymers kleiner oder gleich 0,1 betragen und das Polymer ein transparentes Polymer mit einer Lichttransmission gemessen in einem UV-VIS Spektrometer an einer Probe mit einer Dicke von 1 mm im Wellenlängenbereich von 400-800 nm von >50% sein. Die erfindungsgemäßen Erzeugnisse können sich vorteilhafterweise auch dadurch auszeichnen, dass diese im Wesentlichen transparent sind. Dies kann in den Fällen vorteilhaft sein, in denen "unsichtbare" Erzeugnisse, wie beispielsweise Zahnschienen, gewünscht sind. Durch den Match zwischen Fasermaterial und Polymer sind die erhältlichen Erzeugnisse hochtransparent und in der Anwendung nicht zu sehen.

Es ist zudem im Sinne der Erfindung ein 3D-Druckverfahren zur Herstellung faserverstärkter Erzeugnisse vorzustellen, wobei zumindest anteilig mittels eines FFF-Verfahrens bei einer Temperatur von > 60°C zeitgleich, nacheinander oder abwechselnd ein thermoplastisches Polymer und eine oder mehrere Fasern mit einer Länge von größer oder gleich 3 cm zu einem Erzeugnis abgelegt werden. Dieses Verfahren hat sich zum Aufbau 3D-gedruckter Erzeugnisse mit stark anisotropen mechanischen Eigenschaften bewährt. Das Verfahren muss dabei nicht zum Aufbau des gesamten faserverstärkten Erzeugnisses verwendet werden. Es ist erfindungsgemäß ausreichend, dass nur ein Teil des Erzeugnisses über oben angegebenes Verfahren erhalten wird. Letzteres kann beispielsweise durch Veränderung eines existierenden Bauteils durch Ablage einer faserverstärkten Schicht auf dieses Bauteil während und nach einem additiven Fertigungsverfahren geschehen. Das FFF ist dabei ein Schmelzschichtungsverfahren. Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch und/oder den Bauraum zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

In jedem Fall müssen die genannten additiven Fertigungsverfahren, wie beispielhaft im Stand der Technik beschrieben, mit geeigneten Verfahren zur Ablage von Langfaser und bevorzugt Endlosfasern kombiniert werden.

Weiterhin erfindungsgemäß ist die Verwendung des erfindungsgemäßen Verfahrens zur Herstellung von Dichtungen, Antriebsriemen, orthopädischen Prothesen, orthopädischen Hilfsmitteln oder Zahnkorrekturschienen. Die erfindungsgemäßen Eigenschaften sind besonders vorteilhaft für Anwendungen mit asymmetrischen Belastungsszenarien, wo die Produkte entweder gute zähelastische Eigenschaften oder über viele Zyklen eine reversible dynamische Verformbarkeit in mindestens einer Raumrichtung aufweisen müssen, bei gleichzeitiger hoher Dimensionskonstanz in mindestens einer dazu bevorzugt orthogonalen Raumrichtung. Bevorzugte Anwendungen sind zum Beispiel Dichtungsmaterialien, die unter Kompression dichten aber eine hohe Verformungsfestigkeit senkrecht zur Kompressionskraft aufweisen sollen (zur Verhinderung einer Spaltextrusion der Dichtung bei Abdichtungen im Hochdruckbereich), gleichzeitig jedoch eine hohe Montageflexibilität aufweisen müssen. Typische Beispiele dafür sind Dichtungsringe (O-Ringe, Nut-Ringe, Flanschdichtungen, Gaskests und andere Produkte mit dichtenden Funktionen).

Weitere bevorzugte Anwendungen sind Antriebsriemen jeden Formats, die senkrecht zur Faserrichtung eine hohe dynamische Flexibilität aufweisen müssen allerdings in Faserrichtung möglichst längenstabil sein sollen. Typische Beispiele sind beispielsweise Antriebsriemen, Zahnriemen, Keilriemen, Antriebsriemen, Kantriemen, Flachriemen, Automatikkupplungsriemen, Transportbänder, wie sie im Transport und Kraftübertragungsanwendungen häufig Anwendung finden.

Weitere bevorzugte Anwendungen sind Zahnkorrekturschienen, die senkrecht zur Faserrichtung eine hohe Flexibilität und Zähigkeit aufweisen müssen um sicher angewendet und entnommen werden zu können allerdings in Faserrichtung, bzw. Zahnkorrekturrichtung möglichst dimensionsstabil sein sollen.

Weitere bevorzugte Anwendungen sind orthopädische Stützelemente, die senkrecht zur Faserrichtung eine hohe Flexibilität aufweisen müssen allerdings in Faserrichtung möglichst längenstabil sein sollen: typische Beispiele sind Korsetts, Stützbandagen, Prothesen oder Schuhsohlen.

Weitere bevorzugte Anwendungen sind Druckschläuche, die senkrecht zur Faserrichtung eine hohe Flexibilität aufweisen müssen allerdings in Faserrichtung möglichst längenstabil sein sollen: typische Beispiele sind gängige Pneumatikschläuche und Luftfedern. In diesem und in anderen Fällen mit einer Belastungsrichtung senkrecht zur Hauptausdehnungsachse oder Symmetrieachse des Bauteils ist es häufig vorteilhaft, wenn sich Faserlagen überkreuzen, bevorzugt in einem Winkel von 25° bis 65°, wobei eine bevorzugte Verstärkung radial zur Symmetrieachse erhalten wird. Diese Ausgestaltung kann die Beweglichkeit und Elastizität in der Symmetrieachse weitgehend erhalten.

Des Weiteren erfindungsgemäß ist eine Dichtung erhältlich nach dem erfindungsgemäßen Verfahren. Gerade Dichtungen können unterschiedlichen mechanischen Belastungen in unterschiedlichen Vorzugsrichtungen ausgesetzt sein. In diesen Fällen hat es sich als vorteilhaft erwiesen, dass 3D gedruckte Dichtungen, wie beispielsweise Dichtringe, verwendet werden, welche in Belastungsrichtung außerordentliche Elastizitätswerte aufweisen. Die anisotropen mechanischen Eigenschaften der Dichtungen können so zu einer verlässlicheren Dichtwirkung und längeren Lebensdauer der Dichtung beitragen. Eine bevorzugte Materialkombination für O-Ringe ist TPU/Polyaramidfaser.

Weiterhin erfindungsgemäß ist ein Antriebsriemen erhältlich nach dem erfindungsgemäßen Verfahren. Auch die Belastungssituation bei Antriebs- oder Steuerriemen kann im hohen Maße anisotrop sein. Auch in diesen Fällen ist es vorteilhaft, dass die verwendeten 3D-gedruckten Riemen anisotrope mechanische Eigenschaften aufweisen. Die kann zu einer verlässlichen Aufnahme der wirkenden Kräfte und zu einer elastischen Anpassung der Antriebsriemen beitragen.

Zusätzlich im Sinne der Erfindung ist eine Zahnkorrekturschiene erhältlich nach dem erfindungsgemäßen Verfahren. Gerade Zahnkorrekturschienen können in der Anwendung von stark anisotropen mechanischen Eigenschaften profitieren. So kann über die elastischen Eigenschaften in einer Richtung senkrecht zur Hauptbelastungsrichtung der Zahnschiene das Einsetzen der Schiene erleichtert werden. Andererseits können in Hauptbelastungsrichtung stärkere Kräfte aufgewendet werden, welches zu einer erhöhten Wirksamkeit der Zahnschiene beitragen kann.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken. Es zeigen die:
Fig. 1 ein mögliches Erzeugnis im Sinne der Erfindung. Dargestellt ist eine erfindungsgemäß über 3D-Druck hergestellte Luftfeder in der Aufsicht;
Fig. 2 ein mögliches Erzeugnis im Sinne der Erfindung. Dargestellt ist eine erfindungsgemäß über 3D-Druck hergestellte Luftfeder in einer Schnittdarstellung;
Fig. 3 ein mögliches Erzeugnis im Sinne der Erfindung. Dargestellt ist ein erfindungsgemäß über 3D-Druck hergestelltes Dichtungselement mit eingebetteter Endlosfaser;
Fig. 4 ein mögliches Erzeugnis im Sinne der Erfindung. Dargestellt ist eine erfindungsgemäß über 3D-Druck hergestellte orthopädische Zahnschiene mit sichtbarer Faserverstärkung;
Fig. 5 ein mögliches Erzeugnis im Sinne der Erfindung. Dargestellt ist eine erfindungsgemäß über 3D-Druck hergestellte transparente orthopädische Zahnschiene mit optisch adaptierter Faserverstärkung;
Fig. 6 ein mögliches Erzeugnis im Sinne der Erfindung. Dargestellt ist der Schnitt durch einen erfindungsgemäß 3D-gedruckten Zahnriemen mit integrierter Faserverstärkung;
Fig. 7 eine mögliche Konfiguration zur erfindungsgemäßen Ablage einer Faser im erfindungsgemäßen Verfahren.

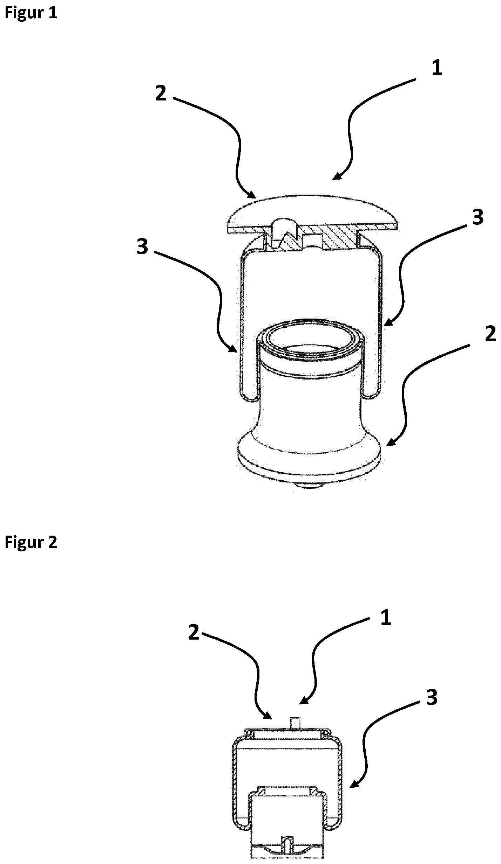

Die Figur 1 und 2 zeigen erfindungsgemäß 3D-gedruckte Luftfedern (1), wobei insbesondere die Membran (3) der Luftfedern (1) über 3D-Druck hergestellt ist und in einem Elastomer, beispielsweise ein thermoplastisches Elastomer, eingebettete Fasern aufweist. Die Luftfeder ist eine Kombination aus nicht über 3D-Druck hergestellten Teilen (2) und der 3d-gedruckten Membran (3). Diese Fasern können in der Membran (3) entweder in einer Richtung oder kreuzweise in Form eines Gewebes oder Geleges eingebaut sein. Die Fasern verlaufen also innerhalb der Membran und würden in der Schnittzeichnung an der Schnittkante "herausschauen". Die Feder (1) kann von innen aufgeblasen werden und richtet sich dadurch auf, wobei sie das Volumen verändert ohne die umhüllende Fläche (Membran) signifikant zu verändern. Die Membran (1) wird also nicht oder nur unwesentlich gedehnt. Die hohe mechanische Festigkeit und die hohe Elastizität ergeben sich dabei aufgrund der anisotropen mechanischen Eigenschaften des Materials mit den eingebetteten Fasern. Im Umfang der Membran (3) ergibt sich also eine hohe mechanische Festigkeit (daraus resultiert eine hohe Druckbeständigkeit), wobei zu den nicht erfindungsgemäßen Materialien (2) hin, eher die elastischen Eigenschaften überwiegen. Optional kann die Feder auch insgesamt mittels eines 3D-Druckverfahrens hergestellt werden. Die Membran (3) der Luftfeder (1) kann beispielsweise aus einer Kombination eines thermoplastischen Elastomers mit eingebetteter Polyamidfasern aufgebaut sein. Es ist aber auch möglich für diesen Aufbau Polychloroprenkautschuk und Polyamidfasern oder thermoplastische Polyurethane und Polyaramidfaser zu verwenden.

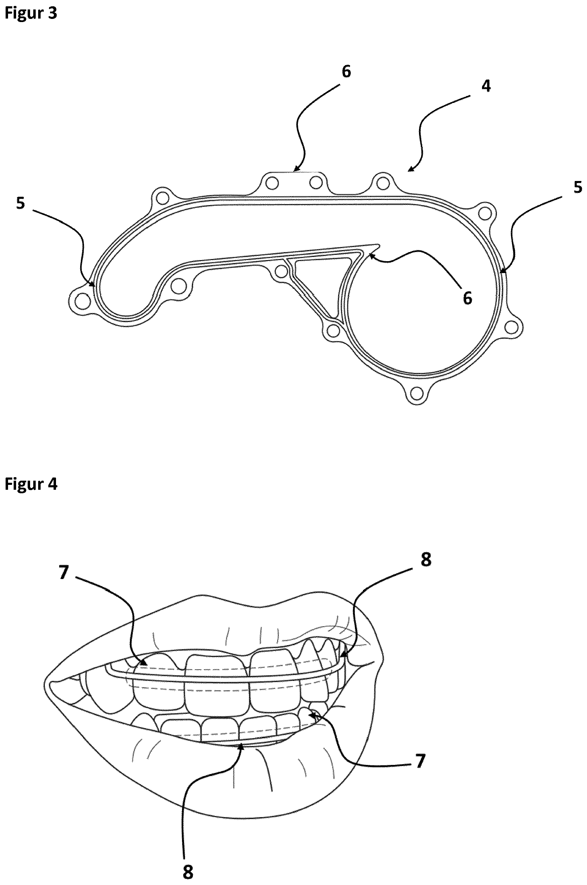

Die Figur 3 zeigt ein 3D-gedrucktes Dichtungselement mit nicht faserverstärkten Bereichen (6) und einer darin eingebetteten Endlosfaser (5). Die Endlosfaser (5) ist vollständig in das Dichtungselement, welches beispielsweise aus einem Elastomer besteht, eingebettet. Aufgrund der Fasereinbettung (5) ergeben sich in der Lastrichtung der späteren Anwendung hohe mechanische Festigkeiten unter nur geringer Ausdehnung des Dichtelements. In einer dazu senkrechten Richtung ist das Dichtelement aber deutlich elastisch, sodass hier eine gute Einbettung an die zu dichtenden Flächen gegeben ist. Dies kann die Haltbarkeit des Dichtelements erhöhen und ermöglicht das sichere Betreiben unter "ungünstigeren" Umgebungsbedingungen. Das Dichtungselement kann beispielsweise aus 3D-gedruckten thermoplastischen Polyurethanen mit eingebetteten Polyaramidfasern bestehen oder diese enthalten.

Die Figur 4 zeigt eine erfindungsgemäß 3D-gedruckte orthopädische Zahnschiene (7) mit in einem Elastomer eingebetteten Fasermaterial (8). Die Fasern (8) sind in Lastrichtung der Anwendung eingebettet und ermöglichen so einen reproduzierbaren und hohen Druck auf die Zähne zur Korrektur der Zahnstellungen. Senkrecht zu der Faser-/Belastungsrichtung ist die Zahnschiene (7) bedingt durch den erfindungsgemäßen Aufbau äußerst elastisch, sodass ein einfaches Einsetzen der Zahnschiene (7) gewährleistet ist. Dies kann den Komfort für den Anwender erhöhen. Die Zahnschiene kann beispielsweise aus TPU mit eingebetteten Glasfasern oder aber aus thermoplastischen Silikon mit darin eingebetteten Glasfasern aufgebaut sein.

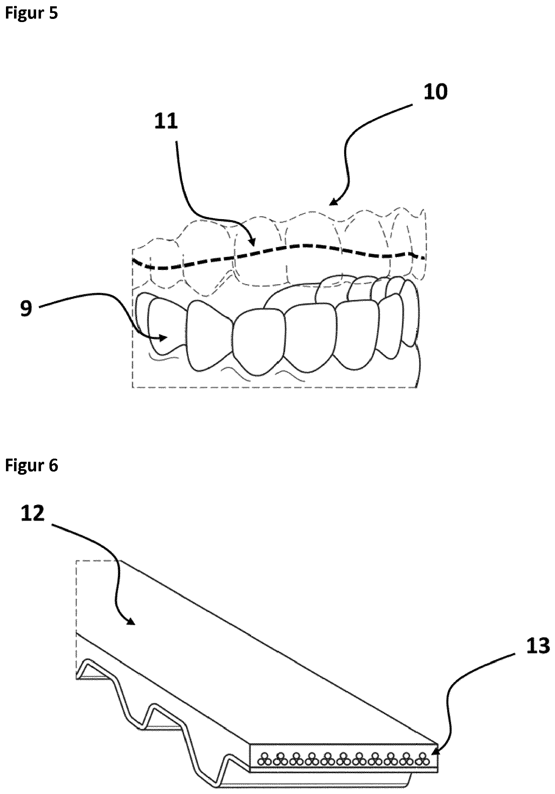

Die Figur 5 zeigt ebenfalls eine erfindungsgemäß 3D-gedruckte orthopädische Zahnschiene (10) aus einem Elastomer mit eingebetteten Fasermaterial (11), wobei sich basierend auf den optischen Eigenschaften des Fasermaterials und den optischen Eigenschaften des Polymers sich ein optischer Match ergeben kann, welcher das Fasermaterial nicht sichtbar in das polymere Material einbettet. Die Zahnschiene kann einfach aufgrund der elastischen Eigenschaften des Materials auf dem Gebiss (9) positioniert werden. Diese Ausgestaltung kann dazu beitragen, dass die Zahnschiene weniger sichtbar ist und häufiger durch den Nutzer getragen wird.

Die Figur 6 zeigt einen schematischen Schnitt durch einen erfindungsgemäß 3D-gedruckten Zahnriemen (12) aus einem Elastomer. Senkrecht zur Symmetrieachse des Zahnriemens (12), d.h. senkrecht zum Normalenvektor der Kontaktfläche, sind innerhalb des Zahnriemens Fasern (13) eingebettet, welche die mechanische Belastbarkeit des Zahnriemens deutlich erhöhen. Senkrecht zur Symmetrieachse der Fasern (13), also zu den Außenseiten des Zahnriemens (12) hin, weist der Zahnriemen (12) deutlich elastische Eigenschaften auf, welches die Langlebigkeit des Materials erhöhen kann. Mögliche Materialkombinationen für diese Anwendung wären beispielsweise TPU mit eingebetteten Carbonfasern oder aber hydrierter Nitrilkautschuk/Carbonfasern.

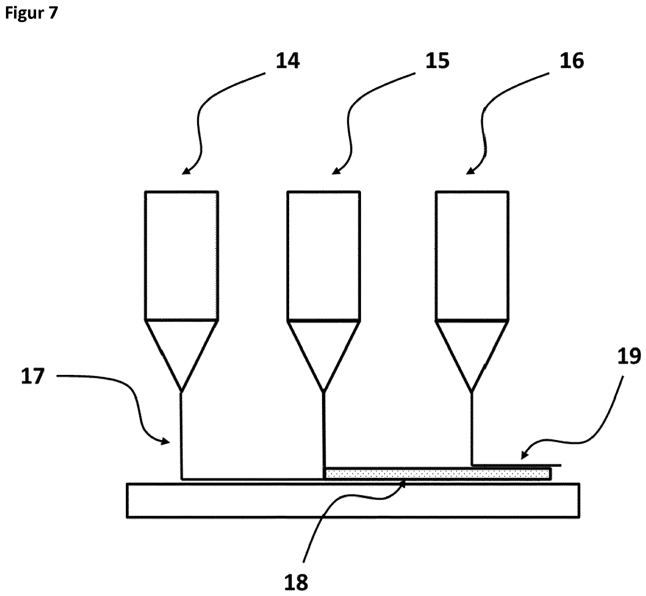

Die Figur 7 zeigt schematisch einen möglichen Aufbau zur Ausführung des erfindungsgemäßen Verfahrens. Es ist dargestellt, dass aus einem Reservoir (15), zwischen zwei Lagen aufgeschmolzenes Elastomer (17, 19), ein Fasermaterial (18) abgelegt wird. In diesem Schema ist dargestellt, dass das aufgeschmolzene Elastomer (17, 19) aus zwei unterschiedlichen Vorlagen (14, 16) stammt. Es ist aber auch möglich, dass nur eine Düse das Elastomer (17, 19) ablegt und die Einbettung des Fasermaterials (18) über ein wiederholtes Auftragen aus nur einer der Düsen (14, 16) erfolgt.

## Patentansprüche

1. Faserverstärktes, 3D gedrucktes elastisches Erzeugnis,
**dadurch gekennzeichnet, dass**
das Erzeugnis einen Gewichtsanteil von ≥ 50% eines Polymers mit einem mittleren Molekulargewicht (Mₙ) von ≥ 5.000 g/mol, gemessen mittels GPC, und einen Gewichtsanteil von ≥ 0,5 % und ≤ 20% einer oder mehrerer Fasern mit einem Aspektverhältnis von ≥ 100 und einer Länge von ≥ 3 cm und ≤ 1000 cm aufweist, wobei das Erzeugnis zumindest anteilig mittels eines FFF-("Fused Filament Fabrication") Verfahrens hergestellt ist und das Erzeugnis im Bereich der Faserverstärkung und in Richtung der Fasersymmetrieachse einen Zugmodul nach DIN EN ISO 527-1 gemessen von ≥ 1,5 GPa aufweist.

2. Erzeugnis nach Anspruch 1, wobei das Erzeugnis im Bereich der Faserverstärkung und senkrecht zur Fasersymmetrieachse einen Zugmodul nach DIN EN ISO 527-1 gemessen von ≤ 1,2 GPa, aufweist.

3. Erzeugnis nach einem der vorhergehenden Ansprüche, wobei das Erzeugnis an wenigstens einem räumlichen Abschnitt rotationsymmetrisch ist und die Symmetrieachse der Fasern senkrecht zur Symmetrieachse des Erzeugnisses ausgerichtet sind.

4. Erzeugnis nach einem der vorhergehenden Ansprüche, wobei das Erzeugnis ein Aspektverhältnis von ≥ 1 aufweist und die Symmetrieachse der Fasern im Wesentlichen in einer Ebene mit der Erzeugnisachse mit der größten Ausdehnung liegt.

5. Erzeugnis nach einem der vorhergehenden Ansprüche, wobei das Erzeugnis im Bereich der Faserverstärkung einen Verlustfaktor tan δ von ≤ 0,07, gemessen mittels mechanisch dynamischer Analyse (DMA) in Zugbeanspruchung, und eine Streckgrenze in Richtung der Fasersymmetrieachse von < 7% gemessen nach DIN EN ISO 527-1 aufweist.

6. Erzeugnis nach einem der vorhergehenden Ansprüche, wobei das Erzeugnis im Bereich der Faserverstärkung und senkrecht zur Fasersymmetrieachse eine Streckgrenze von > 5% gemessen nach DIN EN ISO 527-1 aufweist.

7. Erzeugnis nach einem der vorhergehenden Ansprüche, wobei das Polymer ein thermoplastisches Elastomer ist.

8. Erzeugnis nach einem der vorhergehenden Ansprüche, wobei das Polymer ein Polyurethan oder ein Kautschuk ist.

9. Erzeugnis nach einem der vorhergehenden Ansprüche, wobei die Fasern ausgesucht sind aus der Gruppe bestehend aus Glas-, Carbon-, Basalt-, Polyester-, Polyethylen-, Polyurethan, Polyamid-, Polyaramid-, Metall-, Cellulose-Fasern oder Mischungen daraus.

10. Erzeugnis nach einem der vorhergehenden Ansprüche, wobei der Unterschied im Brechungsindex ΔRI der Fasern und des Polymers kleiner oder gleich 0,1 beträgt und das Polymer ein transparentes Polymer mit einer Lichttransmission gemessen in einem UV-VIS Spektrometer an einer Probe mit einer Dicke von 1 mm im Wellenlängenbereich von 400-800 nm von >50% ist.

11. 3D-Druckverfahren zur Herstellung faserverstärkter Erzeugnisse,
**dadurch gekennzeichnet, dass**
zumindest anteilig mittels eines FFF-Verfahrens bei einer Temperatur von > 60°C zeitgleich, nacheinander oder abwechselnd ein thermoplastisches Polymer und eine oder mehrere Fasern mit einer Länge von größer oder gleich 3 cm zu einem Erzeugnis abgelegt werden.

12. Verwendung des Verfahrens nach Anspruch 11 zur Herstellung von Dichtungen, Antriebsriemen, orthopädischen Prothesen, orthopädischen Hilfsmitteln oder Zahnkorrekturschienen.

13. Dichtung erhältlich nach einem Verfahren nach Anspruch 11.

14. Antriebsriemen erhältlich nach einem Verfahren nach Anspruch 11.

15. Zahnkorrekturschiene erhältlich nach einem Verfahren nach Anspruch 11.
